# EUROPEAN PATENT APPLICATION

(11) **EP 3 695 716 A1**
(43) Date of publication of application: **19.08.2020**
(21) Application number: 20156609.8
(22) Date of filing: 11.02.2020
(51) Int. Cl.: A01K 15/02

(54) **ANIMAL FEEDING ROBOT WHICH STIMULATES OLFACTORY SENSE OF ANIMAL**

(30) Priority: 16.02.2019 KR 20190018291; 14.01.2020 KR 20200005041
(71) Applicant: Roboi Inc., Gyeonggi-do 16656 (KR)
(72) Inventor: LEE, JONG SEOB, 16363 Gyeonggi-do (KR); KONG, JIN SEONG, 21125 Incheon (KR); KIM, JEONG JAE, 08787 Seoul (KR); KIM, JOO HYUN, 10508 Gyeonggi-do (KR); KIM, HYUN, 21940 Incheon (KR)
(74) Representative: Brann AB

(57) **Abstract**

The present invention provides an animal feeding robot, in which a feed discharge unit, where a feed smell discharge outlet for discharging a feed smell that stimulates the olfactory sense of an animal is formed, is installed and which can stimulate the sensitive olfactory sense of an animal to attract the animal's attention and induce the animal's behavior so as to make a contact with the robot even during the period when the robot stops operating, thereby discharging feed as a performance reward. The present invention provides an animal feeding robot which can maximize the remote control management uptime of a robot by minimizing power source consumption via elimination of the use of various power sensors and sound generators with high power source consumption, while, being equipped therein with a means for discharging the smell of feed, capable of promoting the animal's voluntary access to and contact with the robot.

## Description

### BACKGROUND OF THE INVENTION

### Field of the invention

The present invention relates to an animal feeding robot including a feed container or feed discharge unit, in which a smell discharge outlet is formed in a feed container or feed discharge unit to stimulate the olfactory sense of an animal.

Although animals raised by humans, such as dogs and cats, usually show reduced wild-type aggressiveness, their activities are largely influenced by appetite and desire for breeding. While breeding desire is a transient factor that governs animal behavior that is intensely expressed during the breeding season, appetite is a factor that governs everyday behaviors.

The animal appetite, which is a factor that governs daily animal behaviors, is stimulated by an olfactory sense and an auditory sense, which are far superior to those of humans. In particular, during the absence of a breeder of an animal, when the animal being raised is isolated from its breeder and feels emotional anxiety, or in particular, when feed is depleted and the feeding activity of the animal stops or becomes impossible, the animal is placed under extreme stress.

In such situations, the olfactory sense or auditory sense of an animal to find food becomes more sensitive. Therefore, the present invention relates to an animal feeding robot that utilizes a stimulus through the sensitive olfactory sense and auditory sense of an animal among the physiological characteristics of animals.

The present invention relates to an animal breeding robot, which, attracts animals to voluntarily approach to the breeding robot by stimulating the olfactory sense of an animal by discharging a smell generated by the food itself to the outside from the breeding robot, instead of using an artificial aromatic material that only emits a food smell, and induces an active contact with the robot, thereby providing food to the animal as a reward for the contact behavior.

More specifically, the present invention relates to an animal breeding robot, which visually stimulates an animal by allowing the feed to be looked into by the animal's naked eye through a transparent feed container therein, stimulates the animal's auditory sense by generating a sound when the feed is shaken and thus the feed container is shaken, and stimulates the animal's olfactory sense by discharging a feed smell to the outside through the feed smell discharge outlet, which is formed in plurality on a feed container or feed discharge unit, thereby the animal to make an active contact with or to apply a physical force by biting and shaking the breeding robot.

### Related Art

With the recent surge in animal breeding, there is an increasing need for the development of animal feeding robots. Along with the development of various supplies and foods for animal breeding, a variety of equipments are being distributed to enable the protection and management of animals even in the absence of a breeder.

However, various types of animal feeding robots are being distributed in these animal breeding equipments by feeding or inducing behaviors of the animals, which are raised by a breeder's control in a remote place or according to a built-in application program.

These animal feeding robots are equipped with a variety of complex and sophisticated mechanical/electronic control devices. However, there is an increased power consumption in these animal feeding robots due to the use of mechanical/electronic robot-controlling means, the manageable time for remote control of these robots in the absence of the breeder is more shortened due to the limitations on the power source capacity.

The animal feeding robots being distributed thus far are manufactured using tough materials against the harsh and aggressive attacks by animals (*e*.*g*., biting or punching), and the depletion of the power sources of these robots becomes also faster due to mounting of the means for feed discharge or movement.

The animal feeding robots, which have ceased to operate due to the depletion of the power source, are left unusable without being able to feed animals or induce their behaviors.

In recent years, with the rapid increase in the number of single-person or dual-income households, those who raise animals indoors are also on the rise. As the number of single-person and dual-income couple households who breed animals increases, the number of cases in which pets are left unprotected is also increasing in the absence of their breeder.

As such, in the case of raising animals in single-person or dual-income couple households, during the absence of the breeder, the pet animals may have to spend a long period of time alone being kept indoors in a starved state and may be caused to have a disease, such as animal depression.

Therefore, there is an increasing need for the development of an animal feeding robot that can feed animals in the absence of a breeder, while providing feed by stimulating the visual and olfactory senses of the animals and inducing their exercises so as to prevent the animals from feeling isolated.

According to these needs, various kinds of toys or robots for animals have been developed or have already been released. However, for enabling the operation of these robots and feeding animals by the same for a long period of time in the absence of a breeder, a significant amount of power sources and a sufficient charging time are required.

However, when a robot's power source is exhausted in the absence of a breeder, there was a fatal problem in that the robot for animals can no longer be operated as a robot and feed discharge is also stopped, thus making it impossible to take care of animals by remote control.

Therefore, there is a need for the development of an animal breeding robot with a new concept, in which the feed discharge function can be maintained by minimizing power energy consumption and by possessing the function to intensely stimulate the visual sense and the olfactory sense of an animal so as to induce a physical contact of an animal by means of the smell of feed, even when remote operation is impossible due to exhaustion of the power source.

### [Prior Art Documents]

### [Patent Documents]

Korea Patent Application Publication No. 10-2015-0070624 relates to a pet robot that also serves as an indoor cleaning robot. However, in this invention, the robot is controlled so that its sensor can follow a pet, but the pet actually tracks the moving object out of curiosity. Therefore, the robot of this invention has a problem in that there is a high possibility the robot may collide with a pet.

Additionally, since the objects of this invention are not only to manage pets, but also to serve as a cleaning device, this invention has a problem in that the robot is not expected to have the effect of managing pets because of its low ability to communicate with pets.

In particular, this device is not expected to have an animal breeding function because the device does not have any factor that can stimulate the olfactory sense or auditory sense of an animal to induce the animal make an access to or contact with the robot, and rather, it can cause the animal to avoid or stay away from the device.

Korea Patent Application Publication No. 10-2006-0132381 discloses a mobile communication system capable of pet management and a method of operating the same. This invention discloses a technology, in which the system is configured to include a home server that controls the operation of home appliances connected to the network and checks the status of a pet in the home through a camera, a carrier server for transmitting the status data of the pet received from the home server, and a mobile communication terminal for controlling an operation of the home appliances by inputting control commands for managing the pet through the status data received from the carrier server, and operates the home server and home appliances connected to the home server through the mobile operator server from the mobile communication terminal thereby allowing a user to observe the status of pets in their home in real time from the outside, and accordingly, it is possible that the pet can be managed by outputting the visual/audio data of the user or through the operation of the home appliances, and additionally, it is possible to save the cost and improve user convenience by not requiring a separate subscription to a website and requesting data.

However, this invention does not provide any means to stimulate or feed the olfactory sense or auditory sense of an animal or feed the animal, but also fails to mention any practical means to prevent malfunction or failure of such a feeding device or to reduce the time of absence of control due to exhaustion or lack of the power source.

Korea Patent Registration No. 10-1256054 relates to a pet care system and a method using two-way communication. This invention discloses a technology, in which the system is configured to include a main terminal for controlling the operation of the home appliances connected to the wired/wireless network and receiving and outputting voice and image information from the home appliances or a built-in camera and a microphone, and a user terminal for receiving and outputting voice and image information from the main terminal through the wired/wireless network, receiving control commands input by the user and voice and image information of the user, and transmitting the same to the main terminal, in which the main terminal outputs the voice and image information of the user transmitted from the user terminal through the home appliances or a built-in display unit and a speaker, and controls the operation of the home appliances or the main terminal according to the control commands.

The prior art can only monitor animals and send images or sound signals, but does not mention any method for feeding by inducing via stimulation of the olfactory sense or auditory sense of an animal, and fails to disclose any method at all as to how to reduce the consumption of electrical energy so as to reduce the occurrence of unmanageable time caused by power source consumption.

Korea Patent Registration No. 10-1413043 (2014) relates to a pet care system and a method using real-time two-way communication. The pet care system of this invention discloses a technology, in which the system is configured to include a main terminal for controlling the operation of the home appliances connected to the wired/wireless network and receiving and outputting voice and image information from the home appliances or a built-in camera and a microphone, and a user terminal for receiving and outputting voice and image information from the main terminal through the wired/wireless network, receiving control commands input by the user and audio and image information of the user, and transmitting the same to the main terminal, in which the main terminal outputs the voice and image information of the user transmitted from the user terminal through the home appliances or a built-in display unit and a speaker, controls the operation of the home appliances or the main terminal according to the control commands, automatically attempts to make a video call to your device when the frequency characteristic is analyzed from the pet's voice and determined to be in a certain preset state, and provides color spectrum images that change at predetermined intervals around the image information while outputting the image information of the user on the screen of the electronic device or the display unit.

This patented technology also only relates to the application of bidirectional communication in animals and does not mention any means for feeding animals by stimulating the animals with their olfactory sense or auditory sense.

Korea Patent Application Publication No. 10-2016-0114790 relates to an interactive toy for resolution of pet dog loneliness discloses, which discloses a device that includes an external case of a polyhedron shape where a rollable through-hole for the pet feed discharge outlet is formed on one side; a pet feed receiving unit, being installed on the external case, in which a rotatable central shaft is installed in the center, the internal space is divided into a plurality of spaces symmetrically about the central shaft and a pet feed discharge outlet is formed at a position corresponding to the through-hole, and the pet feed is received in the divided internal space; a motor unit, which, being connected to the central shaft, is fixedly installed at the bottom of the pet feed receiving unit on the internal side of the external case and rotates the central shaft; and a central control unit for controlling the opening and closing of the discharge outlet through the motor unit.

However, this prior art also does not mention any means to induce food procuring activity of an animal through a performance reward for its contact by inducing and promoting its contact via stimulation of the olfactory sense or auditory sense of the animal, and fails to mention any method at all as to how to reduce the consumption of electrical energy so as to reduce the occurrence of unmanageable time caused by power source consumption.

Korea Patent Registration No. 10-1914213 (November 1, 2018) discloses a play bowl for feeding pet food. Such a play bowl for feeding pet food in prior art is configured to include a first container, in which a storage space for receiving feed is formed and a plurality of compartments for partitioning the storage space are installed in a protruded state; a second container, which is detachably coupled to cover the compartments of the first container; a first feeder, which is detachably coupled to the first container in a state where a storage space for storing feed is formed between the first container and the discharge hole through which feed is discharged is formed on the surface thereof; and a second feeder, which is detachably coupled to the second container in a state where a storage space for storing feed is formed between the second container and the discharge hole through which feed is discharged is formed on the surface thereof.

This prior art only discloses a toy for feeding, and there is no operation device by a power source or a remote control via a smartphone, and thus this invention cannot be classified as a remotely controlled management robot for animals that can feed and play at the same time. In addition, the complex structure, in which the feed storage container is divided into two parts and the feeder part is also divided into two types, increases another cause of failure, which is the blockage of feed discharge, and has a problem in that a breeder has no means of remotely detecting such a failure or malfunction even when a failure or malfunction occurs.

Korea Patent Registration No. 10-1889460 (September 4, 2018) discloses an automatic feeding system for a pet noticing a user by detecting pet's movement using a sensing module. In this invention, the system is characterized in that since the system is connected to a pet feeding device through a network, the system can transmit/receive data, in which the system includes a pet feeding device, which photographs a pet through a camera module and transmits the photographed image to a user terminal when the pet is detected to be around the pet feeding device by the user terminal, where the pet feeding application is installed, and the sensing module, wherein the user terminal automatically launches the installed pet feeding application when the user terminal receives the photographed image of the pet from the pet feeding device, and the pet feeding device, upon receiving the feed supply signal from the user terminal, provides a predetermined amount of feed to the pet.

According to the automatic feeding system for a pet, in which the movement of the pet can be detected and notified by the sensing module proposed in this prior art, when the sensing module detects that the pet is in the vicinity of the pet feeding device, the sensing module photographs the pet through the camera module and transmits the photographed image to the user terminal and automatically operates the pet feeding application that is pre-installed on the user terminal, thereby notifying to the user that the pet is in the vicinity of the pet feeding device, and when the sensing module receives a feeding signal from the user terminal, the pet feeding device provides a predetermined amount of feed to the pet and thereby the feed can be provided to the pet considering the needs of the pet rather than the user. Additionally, the invention disclosed in this prior art can allow the pet to eat the feed regularly, by outputting the recorded user's voice and guiding the pet to the pet feed supply device at a predetermined time on the pet feeding device, in case the pet is not detected within a certain period of time through the sensing module after the user's voice is output repeatedly, the user can determine the failure status of the sensing module or the status of the pet by sending a status report message to the user.

However, even in this prior art, the means for providing the feed is attempted to rely on electronic/mechanical remote control, and thus, there is a problem in that power source consumption is increased and the problems of possible occurrence of failure or malfunction due to aggressive behaviors of the animals against these devices are still not solved.

Additionally, when the power sources of these prior art devices are exhausted, the remote feeding cycle is stopped and the play with the pet is also stopped, and causes to feel serious isolation to the pet. Therefore, there still remains a problem in that there are no realistic and practical measures for the unmanageable time period during which remote control management by the breeder becomes impossible.

### SUMMARY OF THE INVENTION

Accordingly, the main object of the present invention is to provide an animal feeding robot, in which a feed discharge unit, where a feed smell discharge outlet for discharging a feed smell that most intensely stimulates an animal is formed, is installed and which can stimulate the olfactory sense of an animal to attract the animal's attention and induce the animal's behavior so as to make a contact with the robot even during the period when the robot's electronial/mechanical operation stops, thereby discharging feed as a performance reward.

Another object of the present invention is to provide an animal feeding robot, which can maximize the remote control management uptime of a robot by minimizing power source consumption via elimination of the use of various power sensors and sound generators with high power source consumption, while, being equipped therein with a means for discharging the smell of feed, capable of promoting the animal's voluntary access to and contact with the robot.

Still another object of the present invention is to provide an animal feeding robot, which is provided with a means to induce an animal's access and contact thereto by the release of a feed smell, and can discharge feed by the action of a physical external force or gravity by eliminating the use of a complex mechanical discharge control device or electronically-operated control device, thereby allowing the feed to be discharged by the action of a physical external force applied by an animal even when the robot's power source is completely discharged.

To achieve the above objects, the present invention provides an animal feeding robot, which can be operated autonomously according to a built-in program or remotely controlled by a breeder through wireless internet, and can discharge feed by inducing an animal's access or contact thereto even when its power source is exhausted.

The animal feeding robot of the present invention is operated by a remote control application program installed on a smartphone or by an application program input into the control unit of the robot body, and micropores, through which the feed smell be discharged, are formed in the feed container or feed discharge unit.

The robot of the present invention is an animal feeding robot, which is controlled through wireless internet by a computer program for remote control or a remote control application program (hereinafter abbreviated as "control App.") installed on a mobile device (*e*.*g*., smartphones) or operated according to an autonomous operation program input into a control unit inside a robot body. The robot of the present invention includes a feed discharge unit for storing and discharging the feed of an animal, in which a plurality of micropores for discharging the feed smell and a feed discharge outlet are formed.

### BRIEF DESCRIPTION OF THE DRAWINGS

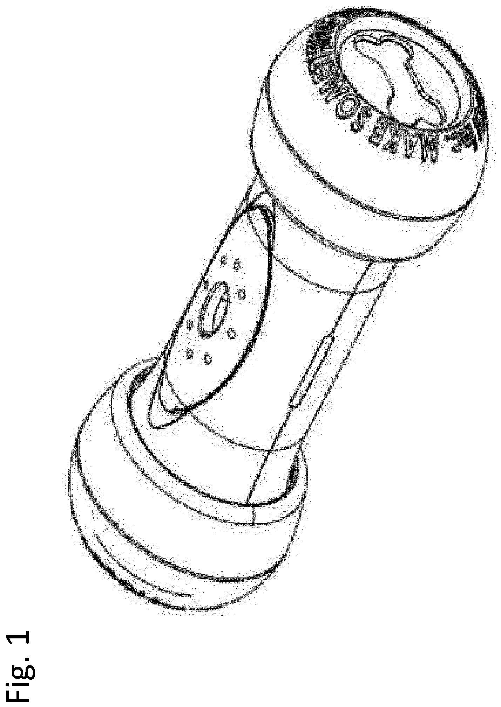

FIG. 1 is a perspective view of a play robot for a companion animal, in which a feed discharge unit having a feed smell discharge outlet according to an embodiment of the present invention is formed.

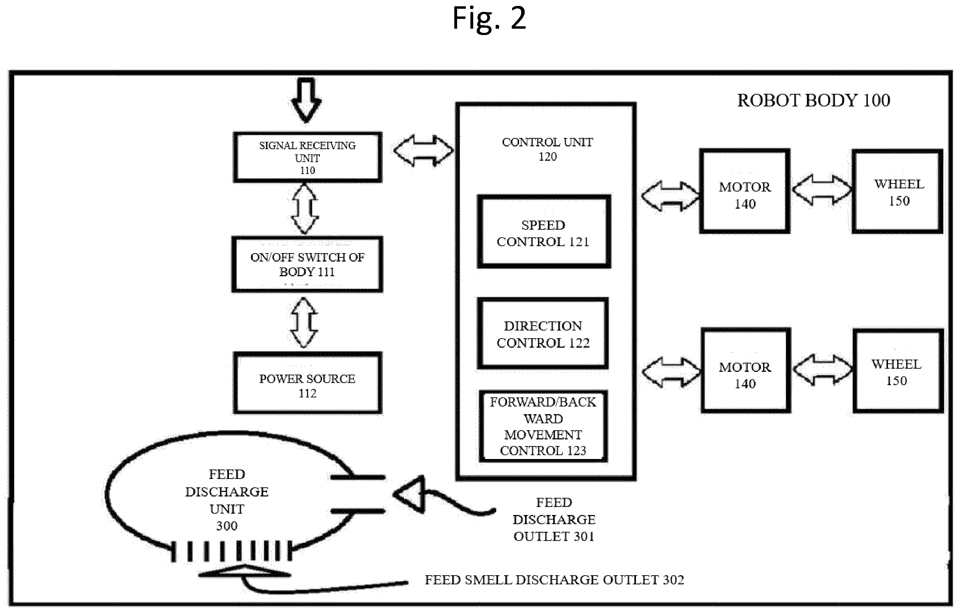

FIG. 2 is a block diagram schematically illustrating the functions and operation of a robot body according to an embodiment of the present invention.

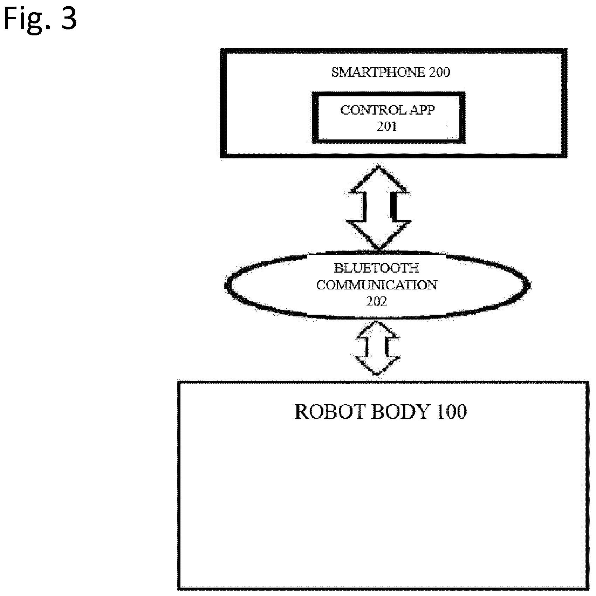

FIG. 3 is a block diagram illustrating for remote operation of a robot according to an embodiment of the present invention.

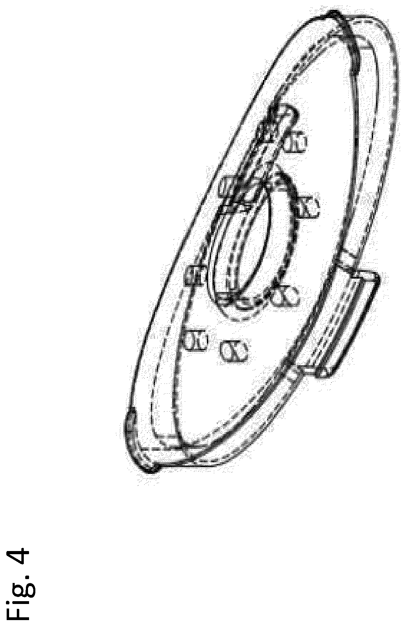

FIG. 4 is a perspective view illustrating a feed discharge unit made of a transparent material, in which a feed smell discharge outlet is included, according to an embodiment of the present invention.

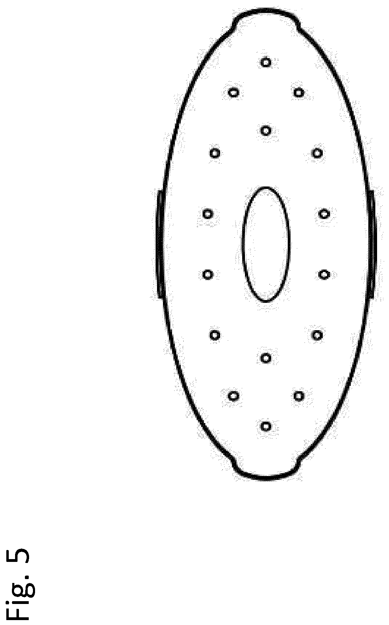

FIG. 5 is a plan view of the lid of a feed discharge unit having a plurality of micro-sized feed smell discharge outlets according to an embodiment of the present invention.

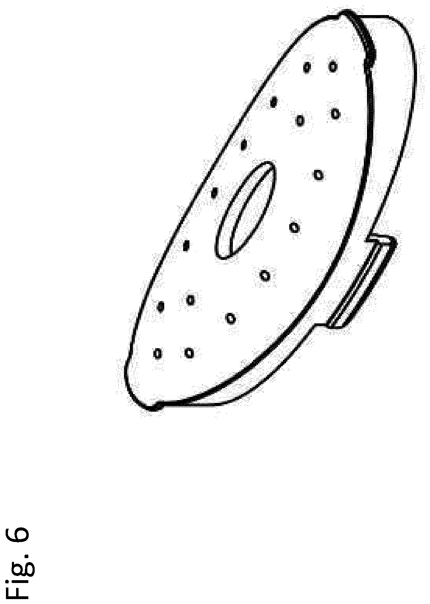

FIG. 6 is an external perspective view of the lid of a feed discharge unit having a plurality of micro-sized feed smell discharge outlets according to an embodiment of the present invention.

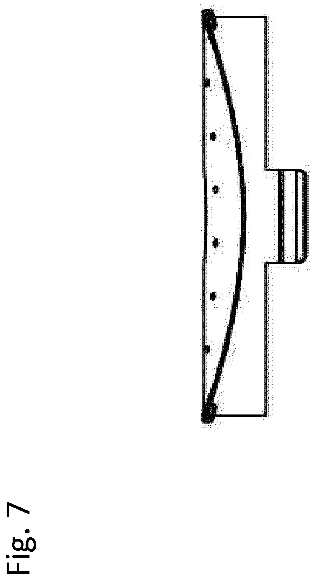

FIG. 7 is a side view of the lid of a feed discharge unit having a plurality of micro-sized feed smell discharge outlets according to an embodiment of the present invention.

### DESCRIPTION OF EXEMPLARY EMBODIMENTS

A most basic embodiment of the present invention is an animal feeding robot, which is controlled outside through wireless internet by a computer program for controlling in a remote place or a remote control application program (hereinafter abbreviated as "control App.") installed on a mobile device (*e*.*g*., smartphones) or operated according to an autonomous operation program (hereinafter abbreviated as "built-in App.") input into a control unit inside the robot body, which includes a feed discharge unit for storing and discharging animal feed, in which a plurality of micropores for discharging smells to the outside and a feed discharge outlet are pformed.

A most preferred specific embodiment of the present invention in which a smell discharge outlet is formed is an animal feeding robot, which is controlled through wireless internet by a remote control application program installed on a computer or mobile device for robots or operated according to an autonomous operation program input into a robot's built-in control unit, in which the animal feeding robot includes: a signal transmission/reception unit for receiving control signals from the control application program; wheels installed on rotation shafts protruding on both sides of the robot body; a motor for transmitting a rotational force of the rotation shaft to the wheels; a power source for providing power to the motor, the control unit, and the signal receiving unit; and a power source switch; a control unit for controlling the direction and speed of the robot with regard to forward movement, backward movement, and rotation, or for rotating the robot body in response to contact detection of a detection sensor according to an autonomous operation mode program input to the control unit, according to the control signal received through the wireless internet from the control application program; a feed discharge unit for storing and discharging animal feed; a housing of the robot body for enclosing the motor, the power source, the power source switch, the signal transmission/reception unit, the control unit, the rotation shaft, and the feed discharge unit; and bearings disposed between the housing of the robot body and the rotation shaft; and in which a plurality of micro-sized outlets, through which the feed smell is discharged, are formed in the feed container or the feed discharge unit.

In an animal feeding robot according to a representative embodiment in which the present invention is implemented, the feed smell discharge outlet formed on the feed container has a diameter of 0.0001 mm or higher to 5 mm or less. The entirety or part of the feed container of the animal feeding robot according to the present invention may be made of a porous transparent material, on which a plurality of micropores having a diameter of 0.0001 mm or higher to 5 mm or less are formed, and may have a mesh structure of a rigid material.

In an embodiment according to the present invention, the entirety or part of the feed container of the animal feeding robot may be made of a plastic material with a strong physical property, preferably polycarbonate resin.

The robot body of the present invention is connected to freely rotate about the center of the wheels and the rotation shaft that traverses the center of the body, and thus, the body is capable of performing a roly-poly reaction around the rotation shaft. In the feeding robot of the present invention, heavy parts are preferably arranged in a lower part of the body so as to control the feed discharge through the roly-poly reaction of the body.

For this purpose, the upper part of the body is made to be much lighter than the lower part of the body by disproportionately disposing heavier parts at the lower parts of the body such that 50% or more of the body weight of the feeding robot of the present invention is concentrated on the lower parts of the body.

Since the lower part of the body of the feeding robot of the present invention is heavier than the upper part of the body, the lower part of the body moves below the wheel shaft while the upper part of the body moves above the wheel shaft like a roly-poly toy by the action of gravity, even when the body is temporarily flipped over or tilted around the rotation shaft.

As described above, by placing heavy parts on the lower part of the body and lightweight parts on the upper part of the body, the lower part of the body returns to the lower part by the action of gravity and the upper part returns again to a position above the upper part of the wheel shaft even when the body is flipped over or tilted about the rotation shaft instantly.

In particular, the feed container is disposed on the upper part of the body located above the wheel shaft of the breeding robot of the present invention, and a feed discharge outlet is formed on top of the feed container, such that the discharge direction of such a feed discharge outlet is directed upward.

A plurality of micro-sized feed smell discharge outlets are formed on the feed container disposed on the upper part of the body and the plate covering the feed container, and thus the feed smell emitted from the feed in the container is discharged out of the robot through the feed discharge outlets and the smell discharge outlet.

Since the feed discharge outlet is formed on top of the feed container and the direction of the feed discharge outlet is formed to be directed upward, the feed filled into the feed container does not spill down in a state where the body is normally aligned so that the upper part is located above the lower part about the wheel shaft by the action of gravity.

However, at the moment when a dog or cat makes a physical impact on the feeding robot of the present invention or bites and shakes the feeding robot and thus the feed discharge outlet of the feed container faces downward, the feed contained in the feed container is discharged downward through the downward-facing feed discharge outlet, by the action of gravity or physical impact.

Even when the upper and lower parts of the robot body of the present invention are instantly flipped over as such by the action of an external force and the feed is discharged as a result, the upper part of the body goes back up and the lower part of the body goes back down as the robot bounces back up like a roly-poly toy, the feed discharge outlet, which is formed upward on top of the feed container at the upper part of the body, is directed upward again, and thereby the feeding discharge is stopped.

That is, when the body of the feeding robot of the present invention is turned over by an external force due to a physical impact, the feed is discharged downward, however, when the external force is stopped, the heavy lower part of the body is returned to a position below the feed container through the roly-poly reaction caused by the action of gravity, and thereby the feed discharge is stopped at the feed discharge outlet, which is configured to face upward from the upper part of the body.

As described above, the feeding robot of the present invention has a technical characteristic in that while the body of the feeding robot of the present invention controls the feed discharge by the action of gravity by causing the roly-poly reaction according to the disproportionate arrangement of the weight between the lower part and the upper part, a plurality of micro-sized feed smell discharge outlets are formed on the feed container disposed on the upper part of the body and the plate covering the feed container, and thus the feed smell emitted from the feed in the container is discharged out of the robot through the feed discharge outlets and the smell discharge outlet.

Due to the technical features of the feeding robot of the present invention, the feeding robot of the present invention does not require a separate electrically- or mechanically-operated device for the control of feed discharge, and the feeding robot of the present invention has an effect that, while feed discharge is controlled by the roly-poly reaction by the action of gravity, the feed smell emitted from the feed in the feed container is discharged out of the robot through the feed discharge outlets and the smell discharge outlet.

Bearings are installed between the rotation shaft, which transmits the rotational force of the motor of the feeding robot of the present invention to the wheels, and the body. The bearings block the transmission of a torque to the body as much as possible while supporting the rotation of the rotation shaft.

When the rotation shaft rotates at a constant speed, the torque transmitted to the body through the bearings becomes weak or corresponds to one less than the critical torque required for the body to be flipped over, despite the rotation of the wheels, the normal arrangement is maintained, in which the body does not turn along and the upper part of the body is placed above the rotation shaft and the lower part of the body is placed below the rotation shaft.

In order to flip the upper part and the lower part of the body by rotating the normally arranged body about the rotation shaft, it is required that more than a certain level of torque, in excess of the critical torque required to flip the body, be transmitted from the rotation shaft to the body through the bearings.

As the difference in weight increases between the upper part and the lower part of the body of the feeding robot of the present invention, preferably, as the difference in weight increases between the upper part and the lower part by increasing the weight of the lower part by adding a weighting measure to the lower part of the body, the critical torque required to flip the body is increased further.

There is no or a very little torque transmitted to the body through the bearings in the rotating shaft rotating at a constant speed. As the speed at which the rotation shaft increases or decreases becomes greater, that is, as the acceleration becomes greater, the torque transmitted from the rotation shaft to the body through the bearings increases.

The essential function of the bearings is to prevent the torque of the rotation shaft from being transmitted to the body. However, since the ability of blocking torque transmission by the bearings is not perfect, and thus, when the rotational acceleration is generated by suddenly changing the rotation speed of the rotation shaft, part of the torque of the rotation shaft is also transmitted to the body.

As the torque blocking efficiency of the bearings becomes low, the torque being transmitted to the body becomes large, whereas as the torque blocking efficiency of the bearings becomes high, the torque being transmitted to the body becomes small.

Even when a torque, which can be adjusted by rotational acceleration and torque blocking efficiency of the bearings, is transmitted to the body as such, in order for the body to receive a torque and rotate it 180 degrees around the rotation shaft, the torque transmitted through the bearings must be greater than the body's rotation resistance due to the difference in weight between the lower part and the upper part of the body.

As the difference in weight become large between the upper part and the lower part of the body, and as the center of gravity of the lower part of the body goes away from the rotation shaft, the critical torque required to rotate and flip the body increases.

Therefore, as the minimum critical torque required to rotate the body increases, the torque required to flip the body to flip over must be greater, and to this end, the rotational acceleration of the rotation shaft must be greater or the torque blocking efficiency of the bearings must be lowered.

Since the feed discharge outlet of the feed container disposed on the main body of the feeding robot of the present invention is directed upward, at the moment when the main body rotates about 180 degrees around the rotation shaft and thus the feed discharge outlet is directed downward, the feed is poured downward by the action of gravity.

Accordingly, it is possible to control the problem that the body is flipped over around the rotation shaft and the feed is discharged downward, by adjusting the rotational resistance caused by the weight difference between the upper part and the lower part of the body.

Additionally, when a torque, which is less than the wheels' combined torque of rolling resistance and static friction, is transmitted to the wheels, the robot does not move and remains stationary because the wheels do not roll. In particular, when a torque greater than the critical rotational resistance of the body is transmitted to the body, the body is flipped over in a state where the robot is stopped.

That is, when a torque, which is less than the sum of the wheels' rolling resistance and static friction, is transmitted to the wheels, and a torque greater than the body's rolling resistance is transmitted to the body, the robot is turned over while rotating its body in a state where the robot is stopped, and the feed is discharged downward by the action of gravity.

When the rotational acceleration of the rotation shaft is raised, the speed of feed discharge also increases as the cycle of rotation/overturn of the body. The reduction of the weight difference between the upper part and the lower part of the body, or the reduction of the weighting measure, makes the rotation/overturn of the body easier thereby increasing the feed discharge rate.

In the feeding robot of the present invention, various types of bearings may be used to adjust torque blocking efficiency, and sliding bearings made of various materials may also be used. Suitably, plastic linear bearings may be used, and more suitably polyacetal bearings may be used.

In a specific embodiment of the bearings to be mounted on the body of feeding robot of the present invention, plain bearings made using a polyacetal ring as a sliding material are suitable.

As used herein, the term "control mode" means that a breeder operates the feeding robot of the present invention in a short distance or a remote location through wireless internet communication using the robot control application program (hereinafter "control App.") installed on a computer or smartphone.

In the control mode, the breeder operates the feeding robot of the present invention, via remote control through wireless communication, to perform forward movement, backward movement, rotation, and stop of the feeding robot using the control App.

In the control mode, the operations of forward movement and backward movement are performed so as to mediate moderate acceleration and deceleration operations of wheels. In the control mode, when the wheels start to move, the robot body is prevented from rotating due to the torque transmission from the wheels, by slowly increasing the rotational speed of the wheel rotation shaft, that is, by lowering the acceleration of rotation.

In the control mode, the overturn of the robot body due to the rotation of the robot body can be prevented by maximally reducing the rotational acceleration of the rotation shaft so as to keep the torque transmitted to the body to be below the rotational resistance of the robot body. That is, since the rotation/overturn of the body cannot be performed in the control mode, the feed discharge outlet cannot face downward and thus feed discharge due to gravity cannot occur.

However, even in the control mode, a plurality of micro-sized feed smell discharge outlets are formed on the feed container disposed on the upper part of the body and the plate covering the feed container, and thus the feed smell emitted from the feed in the container is discharged out of the robot through the feed discharge outlets and the smell discharge outlet.

That is, since the rotation/overturn of the body is prevented in the control mode and the feed discharge outlet maintains its upright position and cannot be directed downward, the discharge of feed downward by gravity does not occur.

In the control mode, the rotatory overturn of the body is prevented and thus the feed discharge outlets are prevented from facing downward. However, in the feed smell discharge outlets formed on the feed container disposed in the upper part of the body and the plate covering the feed container, the feed smell emitted from feed in the feed container is discharged out of the feed discharge outlet and the smell discharge outlets.

As used herein, the autonomous operation mode of operation refers to a case where the robot is not operated by a breeder but is operated according to a program entered into the control unit. When the breeder selects the autonomous operation mode in control App., the communication between the control App. installed in an external device and the feeding robot of the present invention is stopped, and the program entered into the control unit inside the robot (hereinafter, abbreviated as "built-in App.") starts to operate.

In the autonomous operation mode, when an animal comes in contact with the robot of the present invention and a sensor installed in the robot transmits a signal to the built-in App., the program transmits instructions to the operation motor so as to rapidly increase the wheels' rotational speed to generate rotational acceleration on the wheels.

In the autonomous operation mode, when an animal under breeding approaches the feeding robot of the present invention and makes a physical contact with the robot, a sensing sensor installed on the body of the feeding robot detects the contact. The detection sensor that can be used in the present invention may be a gyro sensor which is well known in the art. The signal value transmitted to the gyro sensor that detects the animal contact with the feeding robot of the present invention is updated to the current signal value every 4 milliseconds (ms) (10⁻³ seconds).

When the robot makes a contact with an animal, the signal value of the detection sensor changes. When the difference between the previous signal value and the current signal value is over a certain value, the program determines that the animal has contacted the robot and transmits a signal to operate the motor rapidly.

As such, in the autonomous operation mode, the external force applied by the animal on the robot is detected by the sensor, and when the motor starts to run according to the signal of the built-in App., the rotation speed is increased by the rapid increase of the rotation speed within a short time.

According to the motor driving instruction transmitted by the built-in App. in response to the transmission of contact signal from the detection sensor, when the increase in the rotational acceleration of the motor rotation shaft increases the torque transmitted to the body through the bearings increases, whereas when the torque transmitted to the body exceeds the critical rotational resistance according to the weight distribution of the body, the feed discharge outlet of the feed container faces downward while the body flips over by rotating 180 degrees around the rotation shaft, and thereby the feed is discharged by the action of gravity.

Even in an autonomous operation mode, in the feed container disposed on the upper part of the body and the plate covering the feed container, the feed smell emitted from the feed is discharged out of the robot through the micro-sized feed smell discharge outlets and the feed discharge outlet.

In such an autonomous operation mode, the feed discharge by the rotation of the body, in response to the instant high-speed operation at the moment when an animal makes a contact with the robot of the present invention, stimulates the prey hunt instinct of breeding dogs and cats.

In the feeding robot of the present invention, dogs or cats which have learned the feed discharge process in this autonomous operation mode frequently make voluntary attempts to come in contact with the robot of the present invention to obtain feed.

When a breeder selects the autonomous operation mode of operation in control App. in an external device, the wireless communication between the program and the robot is stopped and the operation of the robot begins according to the built-in App. input into the control unit of the feeding robot of the present invention.

Even in the autonomous operation mode, the feed smell is discharged out of the robot due to the feed container disposed on the upper part of the body and the plate covering the feed container, which induces the tracking by dogs or cats and allows these animals to frequently make voluntary attempts to come in contact with the robot. When a dog or cat successfully tracks and attempts to make a physical contact with the robot of the present invention, the feed is discharged to satisfy the dog or cat as a reward for the performance.

In the autonomous operation mode of the feeding robot of the present invention, in case where the animal does not make a contact with the robot for a certain period of time, the autonomous feed discharge function of the feeding robot itself is intermittently operated at random time intervals by the autonomous operation program of the built-in App.

For example, in a situation where the autonomous operation mode is controlled by the built-in App., if the animal makes no contact with the robot for more than 10 minutes, the motor is suddenly operated at a rapid rate according to the signal transmitted from the built-in App. and generates rotational acceleration and transmits a torque to the body to flip the robot body thereby releasing feed.

The automatic feed discharge function according to such a built-in App., in case where the animal contact is not made for a certain period of time after the animal's contact with the robot, attracts the attention of dogs and cats and induce their feeding activity, by activating the automatic feed discharge function via the operation of the program to discharge the feed to the outside.

As described above, the representative examples of the feeding robot of the present invention have been described in detail with reference to the drawings and embodiments. However, these are just embodiments of the present invention, and those skilled in the art can easily derive various modifications and other embodiments equivalent to the present invention from the present invention described above. Therefore, any specific type of feeding robot for implementing the technical ideas described in the claims belongs to the legal protection scope of the present invention.

**[Reference Numerals]**

| | | | |
|---|---|---|---|
| 100 : | robot body | 110: | signal transmission/reception unit |
| 111 : | robot body ON/OFF switch | 112 : | power source |
| 120 : | control unit | 121 : | speed control unit |
| 122 : | direction control unit | 123 : | forward/backward movement control unit |
| 140 : | motor unit | 150 : | wheel |
| 200 : | smartphone | 201 : | control App. |
| 202 : | Bluetooth wireless communication | | |
| 300 : | feed discharge unit | 301 : | feed discharge outlet |
| 302 : | feed smell discharge outlet | | |

### Advantageous Effects of the Invention

A plurality of feed smell discharge outlets are formed in the feed discharge unit 300, which includes the feed container of the animal feeding robot of the present invention, and the feed smell is discharged to the outside from the robot and thereby stimulates animals to approach to the feeding robot. Therefore, the animal feeding robot of the present invention has an effect of maintaining its breeding function, even in a state where the robot is not operable due to the exhaust of its power source, by allowing the feed to be discharged by inducing an animal, which is stimulated by the feed smell through its olfactory sense, to apply an external physical force to the robot.

The feed container or feed discharge unit of the robot of the present invention can be made using a transparent material well known in the art (*e*.*g*., polycarbonate, polystyrene, polyacrylic resin, *etc*.), so that animals can see the feed by their naked eyes by looking into the inside of the robot, and allow the animals makes a sound by their contact with the robot. Therefore, the animal feeding robot of the present invention has an effect of maintaining its breeding function, even in a state where the robot is not operable due to the exhaust of its power source, by allowing animals to be stimulated through their olfactory sense and auditory sense to thereby exert a physical contact with the robot.

## Claims

1. An animal feeding robot, which is controlled through internet by an external remote control application program or operated by a built-in application program input into a robot, and in which a feed container or feed discharge unit for animals is installed, wherein at least one feed smell discharge outlet is formed in the feed container or the feed discharge unit.

2. The animal feeding robot of claim 1, wherein the animal feeding robot comprises:
a signal transmission/reception unit for receiving control signals from the control application program;
wheels installed on rotation shafts protruding on both sides of the robot body;
a motor for transmitting a rotational force of the rotation shaft to the wheels;
a power source for providing power to the motor, the control unit, and the signal receiving unit; and a power source switch;
a control unit for controlling the direction and speed of the robot with regard to forward movement, backward movement, and rotation, or for rotating the robot body in response to contact detection of a detection sensor according to a built-in autonomous operation mode program input to the control unit, according to the control signal received through the wireless internet from the control application program;
a feed discharge unit for storing and discharging animal feed;
a housing of the robot body for enclosing the motor, the power source, the power source switch, the signal transmission/reception unit, the control unit, the rotation shaft, and the feed discharge unit; and
bearings disposed between the housing of the robot body and the rotation shaft; and wherein at least one feed smell discharge outlet is formed in the feed container or the feed discharge unit.

3. The animal feeding robot of claim 1 or claim 2, wherein the feed smell discharge outlet formed on the feed container has a diameter of 0.0001 mm or higher to 5 mm or less.

4. The animal feeding robot of claim 3, wherein the entirety or part of the feed container, on which a plurality of micropores having a diameter of 0.0001 mm or higher to 5 mm or less are formed, is made of a porous transparent material.

5. The animal feeding robot of claim 4, wherein the entirety or part of the feed container is made of polycarbonate resin.
